# EUROPEAN PATENT APPLICATION

(11) **EP 4 794 346 A1**
(43) Date of publication of application: **19.08.2026**
(21) Application number: 25157534.6
(22) Date of filing: 12.02.2025
(51) Int. Cl.: H04N 23/61, H04N 23/67

(54) **A METHOD FOR GENERATING A FOCUS SIGNAL FOR FOCUSING OF A CAMERA OF AN ASSISTANCE SYSTEM, A CORRESPONDING COMPUTER PROGRAM PRODUCT, A CORRESPONDING COMPUTER-READABLE STORAGE MEDIUM, AS WELL AS A CORRESPONDING ELECTRONIC COMPUTING DEVICE**

(71) Applicant: Connaught Electronics Ltd., County Galway H54 Y276 (IE)
(72) Inventor: BARAKAT, Basem, 12577 Cairo (EG); RADWAN-GADELRAB, Ahmed, 12577 Cairo (EG); CASEY, Aidan, Tuam, H54 Y276 (IE); RANGANATHAN, Rajkumar, Tuam, H54 Y276 (IE); DEVER, Barry, Tuam, H54 Y276 (IE)
(74) Representative: Jauregui Urbahn, Kristian

(57) **Abstract**

The invention relates to a method for generating a focus signal (25) for focusing of at least one camera (4) of an assistance system (2) of a motor vehicle (1) by an electronic computing device (6), comprising the steps of receiving a vehicle movement status signal (17), depending on the vehicle movement status signal (17) selecting a camera (4) from at least two cameras (4) of the motor vehicle (1); receiving at least one captured image (26) from the selected camera (4) of surroundings (5) of the motor vehicle (1); detecting at least one object (8) in the received image (26); determining a sharpness of that at least one object (8) in the captured image (26); and generating the focus signal (25) depending on the determined sharpness for sharpening the determined object (8). Furthermore, the present invention relates to a computer program product, a computer-readable storage medium, as well as to an electronic computing device (6).

## Description

The present invention relates to a method for generating a focus signal for focusing of at least one camera of an assistance system of a motor vehicle by an electronic computing device according to the pending claim 1. Furthermore, the present invention relates to a computer program product, a corresponding computer-readable storage medium, as well as to a corresponding electronic computing device.

Traditional autofocus methods, in particular in the area of automobiles, often rely on sharpness matrices, which may not consider the relevance of detected objects, for example pedestrians, signs, bicycles, in the specific scene. Achieving optimal focus based on both objects presence and region of interest is crucial for safety and image quality.

Sharpness is an important factor in object detection for so-called advanced driver assistance systems (ADAS) as it affects the accuracy and reliability of the detecting objects on the road. Sharpness refers to the clarity and distinctness of the edges of an object in an image or sensor data. In ADAS, sharpness is critical in distinguishing between different types of objects, such as vehicles, pedestrians, and other obstacles, and in accurately estimating their size, shape, and position.

Sharpness can be affected by various factors, including the quality of the camera or sensor, lighting conditions, weather, and distance to the object. Pure sharpness can result in false positives, wherein an object is detected that does not exist, or false negatives, where a real object is not detected. This can lead to incorrect decisions by the ADAS, such as sudden braking or swerving, which can be dangerous for the vehicle occupants and other road users.

To ensure sharpness in object detection, various techniques can be used such as image processing algorithms that enhance edge contrast and reduce noise. Additionally, cameras and sensors with high resolution and sensitivity can improve sharpness, especially in low-light conditions or long distances.

Therefore, sharpness is a crucial factor in object detection for ADAS, as it affects the accuracy and reliability of detected objects on the road. Ensuring sharpness through image processing algorithms and high-quality cameras and sensors can help prevent false positives and false negatives, thereby improving the safety and performance of ADAS.

WO 2023/210856 A1 discloses a camera device comprising a processor and a memory for storing instructions that can be executed by means of the processor comprising: an image sensor for capturing an image of a subject; an object identification unit for identifying an object included in the captured image; a distance calculation unit for calculating the distance of the camera device to the identified object on the basis of the proportion of the identified object within the captured image; and a control unit for retrieving the location of an optimum focus having the largest reference value, while moving a lens within a focus range including at least a focus location of the lens corresponding to the calculated distance.

US 2022/076081 A1 discloses apparatus and methods related to photography. A computing can receive an input image. An object detector of the computing device can determine an object region of interest of the input image that is associated with an object detected in the input image. A machine-learning algorithm can determine an output photographic region of interest for the input image based on the object region of interest and the input image. The machine-learning algorithm can be trained to identify an output photographic region of interest that is suitable for use by a photographic function for image generation. The computing device can generate an output related to the output photographic region of interest.

US 2021/092280 A1 discloses an image-capture apparatus and method for an artificial intelligence based control of imaging parameters of the image-capture apparatus. The image-capture apparatus controls the imaging sensor based on a set of imaging parameters associated with the imaging sensor, to acquire imaging information. The acquired imaging information includes a first object of a plurality of objects. The image-capture apparatus generates by, a neural network model, a first classification result based on the acquired imaging information and modifies one or more first imaging parameters of the set of imaging parameters based on the generated first classification result for the first object. The image-capture apparatus further controls the imaging sensor based on the modified set of imaging parameters, to reacquire the imaging information to maximize a confidence of the neural network model for the detection of the first object in the reacquired imaging information.

It is an object of the present invention to provide a method, a corresponding computer program product, a corresponding computer-readable storage medium, as well as a corresponding electronic computing device, by which focusing of a camera of an assistance system can be provided in an improved manner.

This object is solved by a method, a corresponding computer program product, a corresponding computer-readable storage medium, as well as a corresponding electronic computing device according to the independent claims. Advantageous embodiments are presented in the dependent claims.

One aspect of the invention relates to a method for generating a focus signal for focusing of at least one camera of an assistance system of a motor vehicle by an electronic computing device. A vehicle movement status signal is received by the electronic computing device. Depending on the vehicle movement status signal a camera from at least two cameras of the motor vehicle is selected by the electronic computing device. At least one captured image from the selected camera of surroundings of the motor vehicle is received by the electronic computing device. At least one object in the received image is detected by the electronic computing device. A sharpness of that at least one object in the captured image is determined by the electronic computing device. The focus signal is generated depending on the determined sharpness for sharpening the determined object by the electronic computing device.

Therefore, an approach that may, for example, combine deep learning with object detection is provided. By replacing traditional sharpness matrices with object detection results masked by, for example, region of interest obtained from driving scenarios, a real-time solution for optimal focus settings of the camera is provided.

In particular, the method aims to autofocus the camera by incorporating object detection masked by, for example, region of interest obtained from driving scenarios. Unlike traditional methods according to the state of the art that rely solely on image sharpness, the method dynamically adjusts focus based on the presence and relevance of detected objects in the surroundings. By leveraging deep learning models, a real-time focus optimization for various scenarios can be provided, including pedestrian-rich environments, traffic signs and dynamic scenes.

According to the state of the art, traditional autofocus relies on contrast or phase-based methods, which may not handle complex scenarios effectively. Recently, deep learning methods have been developed to address these methods by feature extraction and analysis but without object/pedestrian guidelines and targets of optimization.

According to the invention, the method obtains autofocusing by object detection masked by, for example, region of interests obtained from driving scenarios. First, the vehicle movement may be detected, secondly a dynamic camera switch is applied depending on the movement and, for example, speed of the motor vehicle, and then a pre-trained object detection model is utilized to identify relevant objects, for example, pedestrians or signs, in the scene/surroundings. This step provides bounding boxes and confidence scores for the detected objects and is triggered by the driving scenario to decide their region of interest. Next, for example, an iterative sharpness calculation is performed within the region of interest. Finally, an optional deep neural network is trained to predict optimal focus adjustments based on an object/pedestrian relevance mask derived from the sharpness calculation.

A deep neural network (DNN) is a type of neural network that has multiple hidden layers, typically more than three. Each layer contains a large number of interconnected nodes or "neurons", which processes information and transmits signals to other neurons in the layers. Deep neural networks are capable of learning complex patterns and representations of large amounts of data, making them highly effective for tasks such as image recognition. The depth of deep neural network allows it to learn hierarchical representation of data, where each layer captures increasingly abstract features of the input. For example, in image recognition, the first layer might learn to detect edges and textures, while subsequent layers learn to recognize more complex shapes and objects. Deep neural networks require large amounts of labeled data and computational resources for training, but once trained, they can make highly accurate predictions on new, unseen data. They are used in various applications, and in particular in at least in part autonomous motor vehicles.

In particular, depending on the generated focus signal of the electronic computing device, a focus control module can be utilized, which implements a focus control to adjust the camera focus in real-time based on, for example, predictions from the deep neural network. Furthermore, continuous monitoring is provided in order to monitor the surroundings and adjust the focus dynamically as the driving scenario may change.

Furthermore, an iterative sharpness calculation for the object may be provided. Therefore, a sharpness matrix calculation measures the sharpness within, for example, a region of interest iteratively using matrices such as a so-called Laplacian variance. The camera lens position may also be iteratively adjusted to maximize the sharpness matrix within the region of interest.

In particular, depending on the selected object and the sharpened object a control signal for controlling a functional device of the assistance system can be generated. In particular, for example an acceleration signal or a steering signal can be generated in order to prevent a collision with that object.

According to an embodiment, depending on a vehicle movement direction as the vehicle movement status the camera is selected. For example, if the motor vehicle is moving forwards, a front camera may be selected. If the motor vehicle is moving backwards, the rear camera may be selected. If the motor vehicle is turning, for example to the right, the front camera and the right camera may be selected. Therefore, relevant objects in the corresponding direction may be used in order to focus on that determined object.

In another embodiment, depending on a vehicle movement speed as the vehicle movement status the camera is selected. For example, cameras, which are capturing surroundings in the near field may be selected when the motor vehicle is moving at low speed. If the motor vehicle is moving at high speed, for example on highways, then cameras, which are capturing distant distances may be selected. Therefore, relevant objects may be captured depending on the vehicle movement status.

In another embodiment, the vehicle movement status signal is received from a speedometer device of the motor vehicle and/or a gear position device of the motor vehicle and/or a navigation device of the motor vehicle. Therefore, a reliable way for determining the vehicle movement is provided by utilizing the different devices of the motor vehicle. In particular, the method utilizes devices, which are already arranged at the motor vehicle. Therefore, relevant objects can be detected in an improved manner.

In another embodiment, depending on the vehicle movement status signal a front view camera and/or a rear view camera and/or a side view camera are selected. Therefore, different cameras can be selected depending on the movement status. In particular, depending on, for example, the gear position, the front camera or the rear camera may be selected.

In another embodiment, depending on the vehicle movement status signal a region of interest in the image for determining the object is selected. For example, if the motor vehicle is moving forwards, a region of interest of the front camera may be used. For example, if the motor vehicle is at low speed, a region of interest for the near field may be used. Therefore, relevant objects can be identified in an improved manner, and these relevant objects may be sharpened.

In another embodiment, depending on the vehicle movement status signal an object in the image of at least two objects in the image is selected, and the sharpness of the selected object is determined. For example, in the image there may be at least two or more objects. Depending on the movement status, the object may be selected. Therefore, in particular the relevant object may be determined depending on the vehicle movement status.

Therefore, depending on a decision criterion the object is selected. The decision criterion may be, for example, the type of object, the velocity of the motor vehicle, a distance of the object, an area of the object in the image, and the current scene, for example, if the motor vehicle is in the city or on a highway. Therefore, different decision criterions may be utilized in order to select the relevant object for sharpening.

According to another embodiment, depending on the decision criterion an object class of each object is determined and depending on a relevance of an object class for the current vehicle movement status the object is selected. For example, at low speed maneuvers, for example in a parking lot, pedestrians may be more important than traffic signs. In a highway situation, traffic signs and other motor vehicles may be more relevant than pedestrians. Therefore, the electronic computing device may classify the object and may then, depending on the classification, decide which object is more relevant than the others and the most relevant object is utilized for sharpening the camera.

In another embodiment, depending on a determined distance of an object relative to the motor vehicle the object is selected. For example, near field objects at a low speed maneuver may be more relevant than far field objects at low speed. Therefore, the object can be selected in an improved manner, and the camera can be sharpened to the relevant object.

According to another embodiment, for detecting the at least one object a bounding box algorithm is used. In the object detection, a bounding box is, in particular, a rectangular frame that surrounds an object in an image or a video frame. The bounding box defines the location and size of the object within the frame, allowing for accurate identification and tracking. The coordinates of the bounding box are defined by its center point, width, and height. The center point is represented by the x- and y-coordinates of the box in the image frame, while the width and height specify the dimensions of the box. These parameters allow the object detection algorithm to determine the location and size of the object with high precision. Bounding boxes are often used in conjunction with other object detection techniques such as feature extraction and classification. For example, a convolutional neural network can be used to extract features from an image, and these features can then be used to classify the object within the bounding box.

In another embodiment, the at least one object relevant for focusing is optically highlighted for being presented on a display device. For example, when the surroundings with the object are presented on a display device, the relevant object may be highlighted in order to inform a user of the motor vehicle/a driver of the motor vehicle which object is most relevant according to the analyzation and is highlighted in order to generate a focus of the user to that object. Therefore, the safety to prevent a collision is improved.

In particular, the present invention is a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Furthermore, the present invention relates to an electronic computing device for generating a focus signal for focusing of at least one camera of an assistance system of a motor vehicle, wherein the electronic computing device is configured for performing a method according to the preceding aspect. In particular, the method is performed by the electronic computing device.

A still further aspect of the invention relates to an assistance system comprising at least a camera and the electronic computing device according to the preceding aspect.

Furthermore, the invention relates to a corresponding motor vehicle comprising at least the assistance system according to the preceding aspect. The motor vehicle may be configured as an at least in part automated motor vehicle or a fully automated motor vehicle.

Advantageous embodiments of the method are to be regarded as advantageous embodiments of the computer program product, the computer-readable storage medium, the electronic computing device, the assistance system, as well as the motor vehicle. The electronic computing device, the assistance system, as well as the motor vehicle therefore comprises means for performing the method.

In the present disclosure, a computing unit/electronic computing device can for example be understood as a data processing device with processing circuits. Thus, a computing unit can perform computing operations to process data. The computing operations can also include indexed accesses to a data structure, for example a look-up table, LUT.

Within the scope of the present disclosure, an object recognition algorithm can be understood as a computer algorithm, which is capable of identifying and localizing one or more objects within a provided input dataset, for example input image, for example in that it determines corresponding bounding boxes or regions of interest (ROI) and in particular associates a corresponding object class with each of the bounding boxes, wherein the object classes can be selected from a predefined set of object classes. Therein, the assignment of an object class to a bounding box can be understood such that a corresponding confidence value or a probability that the object identified within the bounding box belongs to the corresponding object class, is provided. For example, the algorithm can provide such a confidence value or a probability for each of the object classes for a given bounding box. The assignment of the object class can for example include the selection or provision of the object class with the greatest confidence value or the greatest probability. Alternatively, the algorithm can also only determine the bounding boxes without associating a corresponding object class. Furthermore, the by the algorithm detected object classes could be represented as dynamic objects in the generated display image as complement to the three dimensional map.

In particular, a computing unit can include one or more computers, one or more microcontrollers and/or one or more integrated circuits, for example one or more application-specific integrated circuits, ASIC, one or more field-programmable gate arrays, FPGA, and/or one or more systems on a chip, SoC. The computing unit can also include one or more processors, for example one or more microprocessors, one or more central processing units, CPU, one or more graphics processing units, GPU, and/or one or more signal processors, in particular one or more digital signal processors, DSP. The computing unit can also include a physical or virtual cluster of computers or others of the mentioned units.

A computing unit can also include one or more hardware and/or software interfaces and/or one or more storage units. Therein, a storage unit can be designed as a volatile data memory, for example as a dynamic random access memory, DRAM, or static random access memory, SRAM, or as a non-volatile data memory, for example as a read-only memory, ROM, as a programmable read-only memory, PROM, as an erasable programmable read-only memory, EPROM, as an electrically erasable programmable read-only memory, EEPROM, as a flash memory or flash EEPROM, as a ferroelectric random access memory, FRAM, as a magnetoresistive random access memory, MRAM, or as a phase-change random access memory, PCRAM.

Advanced Driver-Assistance Systems (ADAS) according to this invention are sophisticated electronic systems designed to enhance vehicle safety and driver convenience. These systems consist of various technical components, including sensors, cameras, radar, lidar, actuators, and control units. Sensors play a crucial role in detecting the environment around the vehicle. They include ultrasonic sensors, cameras, radar, and lidar. Ultrasonic sensors use sound waves to measure distances to nearby objects, while cameras capture images of the road and surrounding area. Radar and lidar use radio or light waves, respectively, to detect objects at longer ranges and with higher precision. ADAS control units/electronic computing device process sensor data and make decisions based on that information. They typically consist of a microcontroller, memory, input/output interfaces, and communication protocols. The control unit receives data from the sensors, processes it using algorithms and machine learning techniques, and then sends commands to the actuators to take appropriate actions. Actuators are devices that convert electrical signals into physical movements or actions. They include electric motors, solenoids, and hydraulic or pneumatic systems. For example, an electric motor can adjust the steering angle, while a solenoid can control the brakes or throttle position. A user interface provides feedback to the driver about the status of the ADAS. It includes visual displays, audible alerts, and haptic feedback. Visual displays show information on dashboard screens, while audible alerts use sounds or voice messages to warn the driver of potential hazards. Haptic feedback can include steering wheel vibrations or seat pulses to alert the driver of danger. ADAS rely on communication protocols to transmit data between components. Common protocols include CAN (Controller Area Network), LIN (Local Interconnect Network), and Ethernet. These protocols allow different components to communicate with each other, ensuring that the ADAS functions as intended. Modern ADAS use machine learning algorithms to improve their performance over time. These algorithms analyze sensor data and learn from it, allowing the system to adapt to changing conditions and improve its accuracy. In summary, an ADAS consists of various technical components, including sensors, control units, actuators, user interfaces, communication protocols, and machine learning algorithms. By combining these elements, ADAS can help improve vehicle safety, reduce accidents, and enhance the driving experience.

For application cases or application situations, which can arise in a method according to the invention and which are not explicitly described herein, it can be provided that an error message and/or a request for inputting a user feedback are output and/or a default setting and/or a predetermined initial state are adjusted according to the method.

Further features of the invention are apparent from the claims, the figures and the description of figures. The features and feature combinations mentioned above in the description as well as the features and feature combinations mentioned below in the description of figures and/or shown in the figures can be encompassed by the invention not only in the respectively specified combination, but also in other combinations. In particular, implementations and feature combinations can also be encompassed by the invention, which do not comprise all of the features of an originally formulated claim. Moreover, implementations and feature combinations can be encompassed by the invention, which extend beyond or deviate from the feature combinations set forth in the relations of the claims.

Therefore, the figures show in:
- Fig. 1: a schematic top view according to an embodiment of a motor vehicle comprising an embodiment of an assistance system comprising an embodiment of an electronic computing device;
- Fig. 2: a schematic block diagram according to an embodiment of an assistance system; and
- Fig. 3: a schematic flow chart according to an embodiment of the method.

In the figures, the same elements are comprising the same reference signs.

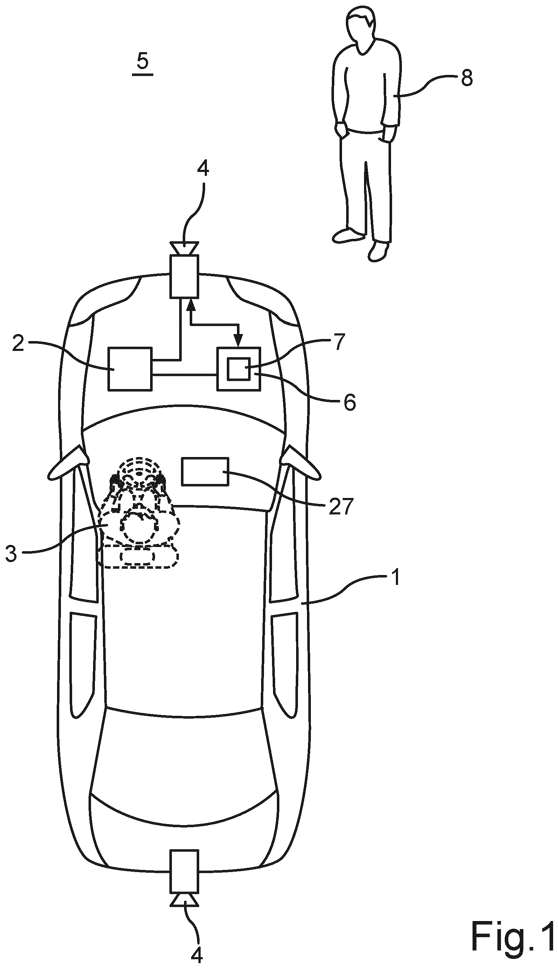

Fig. 1 shows a schematic top view according to an embodiment of a motor vehicle 1. The motor vehicle 1 is at least in part automated or fully automated operated. Therefore, the motor vehicle 1 may comprise an assistance system 2. The assistance system 2 is, for example, configured for supporting a driver 3 of the motor vehicle 1. For example, the assistance system 2 can generate braking signals, acceleration signals or steering signals in order to provide an at least in part automated operation of the motor vehicle 1.

The assistance system 2 may comprise at least a camera 4 for capturing surroundings 5 of the motor vehicle 1. According to the shown embodiment a front camera 4 and a rear camera 4 are shown. It is obvious, that more than two cameras 4 can be provided at the motor vehicle 1. Furthermore, the motor vehicle 1 and/or the assistance system 2 may comprise an electronic computing device 6. The electronic computing device 6 may, for example, comprise a deep neural network 7.

According to the shown embodiment, an object 8 is in the surroundings 5. In particular, the object 8 shown in Fig. 1 is a pedestrian. It is obvious for a person skilled in the art that also other objects, for example traffic signs, other motor vehicles or furthermore, can be captured in the surroundings 5.

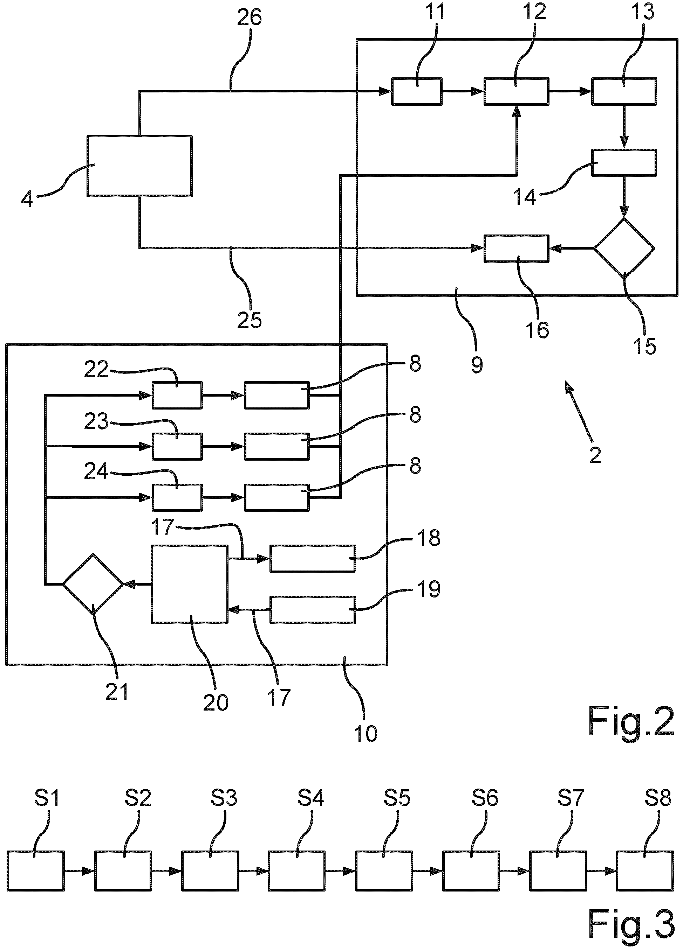

Fig. 2 shows a schematic block diagram according to an embodiment of the assistance system 2. The assistance system 2 may comprise the camera 4 as well as an object based autofocus algorithm 9 for generating a focus signal 25. Furthermore, a driving scenario algorithm 10 is shown.

The object based autofocus algorithm 9 may comprise a first block 11 in which an image frame 26 of the camera 4 is captured. In a second block 12, an object detection within an area of interest is provided. In a third block 13, the sharpness within the area of the detected object 8 is measured. In a fourth block 14, a sharpness maximization algorithm is applied. In a fifth block 15, it is decided, if the maximum sharpness is reached. If not, a sixth block 16 is triggered to update the camera focus lens.

The driving scenario algorithm 10 is, in particular, configured in order to control the second block 12. Therefore, the driving scenario algorithm 10 may receive a vehicle movement status signal 17, for example, from a speedometer device 18 or from a gear position device 19. Furthermore, the vehicle movement status signal 17 can be received from a not shown navigation device. With a driving scenario algorithm 21 a current driving scenario can be determined. In particular, as shown in Fig. 2, three driving scenarios may be selected. In particular, a reverse scenario 22, a high speed scenario 23, in particular in a forward direction, as well as a low speed scenario 24, in particular in a forward direction, may be selected. Depending on the driving scenario 21, different objects 8 may be relevant. For example, in the reverse scenario 22, rocks, poles, shopping signs, vehicles, and pedestrians may be relevant as objects 8. In the high speed scenario 23, speed limit signs and warning signs may be relevant. In the low speed scenario 24, warning signs may be relevant. In the low speed scenario 24 traffic signs, pedestrians, and other motor vehicles may be of relevance. These objects 8 are now transmitted to the second block 12 for the object detection within the area of interest.

Fig. 3 shows a schematic flow chart according to an embodiment of the method. In a first step S1, the vehicle movement detection, in particular from the speedometer device 18 or the gear position device 19 is provided. In a second step S2, a dynamic camera switching is provided, in particular the switch based on the vehicle movement. In a third step S3, the object detection module is controlled in order to identify objects 8 and obtained bounding boxes and confidence scores.

In a fifth step S5, a region of interest determination is provided. In a sixth step S6, a sharpness calculation, in particular as an iterative process within the region of interest, is provided. In a seventh step S7, real-time focus adjustment is provided, in particular adjusting the focus based on the predictions. In an eighth S8, adaptive learning of, for example, the deep neural network 7 is provided wherein continuous learning and adaption is used.

In particular, the figures show that the vehicle movement and speed detection may be provided with a sensor integration. The vehicle sensors, such as the speedometer device 18, the gear position device 19 and other accelerometers to gather real-time data on the vehicle movement and speed is integrated. An onboard processing unit is used to continuously monitor and process the data from these sensors to determine the vehicle movement status, for example reversing, driving forward, or stationary.

The dynamic camera switching uses a movement-based switching logic. The logic module is implemented that dynamically switches focus between multiple cameras based on the processed vehicle movement data. For example, during reversing, activating and focusing the rear camera 4, when the gear position sensor indicates the vehicle is in reverse, is provided. Prioritizing the front camera 4 when the motor vehicle 1 is moving forward, as indicated by, for example, the speedometer device 18 and the gear position device 19. The focus is furthermore dynamically adjusted based on the vehicle's speed. For instance, at higher speeds, the system may prioritize distant objects 8, while at lower speeds, it may focus on nearby objects 8.

For object detection and region of interest determination, a pre-turned object detection model may be used. This model utilizes a pre-turned object detection model, for example a faster RCNN, to identify relevant objects, for example pedestrian, signs, vehicles in the surroundings 5. Bounding boxes and confidence scores for the detected objects 8 are obtained. The region of interest (ROI) is determined based on the detected objects and the current driving scenario. For example, prioritize pedestrians in urban environments and vehicles on highways is utilized. The iterative sharpness calculation utilizes a sharpness metric calculation, which measures the sharpness within the ROI iteratively using metrics such as Laplacian variance.

The camera lens position is iteratively adjusted to maximize the sharpness metric within the region of interest. For real-time focus adjustment, a focus control module may be implemented that adjusts the camera focus in real-time based on the predictions from the deep neural network 7. Monitoring the scene continuously and adjust the focus dynamically as the driving scenario changes may be utilized by a continuous monitoring module.

The deep neural network 7 may be learning adaptively. For example, data collection may be provided continuously from various driving scenarios to improve the modules' performance. The deep learning model is periodically updated with new data to enhance its accuracy and adaptability.

As a first example, a reversing scenario may be provided. The vehicle's sensor detector is reversing. The electronic computing device 6 may activate the rear camera 4 and switches focus to it. Giving the driver's primary concern during reversing is avoiding collisions, the electronic computing device 6 prioritizes the detection and highlighting of potential obstacles in the vehicle path. This may include rocks, poles, shopping signs, vehicles, pedestrians and furthermore. The region of interest is determined based on the detected objects 8. The focus mechanism iteratively adjusts the lens to maximize sharpness within the region of interest. The focus control module adjusts the focus in real-time.

Another example may be the driving forward scenario. The vehicle sensors detect the motor vehicle 1 is moving forward. The electronic computing device 6 activates the front camera 4 and switches focus to it. The object detection model identifies objects 8 for this scenario. For example, in high-speed driving scenarios, typically highways, the algorithm prioritizes focusing on objects 8 relevant to speed and safety, such as speed limit signs and warning signs. The electronic computing device 6 may dynamically adjust its focus to target the nearest detected object 8 within this prioritized category. This approach ensures that the most immediate and critical information is giving precedence for the driver awareness and safety. In low-speed driving scenarios, such as urban environments or parking situations, the vehicle's perception system prioritizes detection and recognition of objects 8 critical for safe navigation and mobility. These objects 8 include traffic signs, pedestrians, vehicles and furthermore. The region of interest is determined based on the detected object 8. The focus mechanism iteratively adjusts the lens to maximize sharpness within the region of interest. The focus control module adjusts the focus in real-time.

In particular, therefore the figures shows a method for generating the focus signal 25 for the camera 4. The vehicle movement status signal 17 is received. Depending on the vehicle movement status signal 17 the camera 4 from at least two cameras 4 is selected. At least one captured image 26 from the selected camera 4 of the surroundings 5 is received. At least one object 8 in the received image 26 is determined. A sharpness of the at least one object 8 in the captured image 26 is determined. The focus signal 25 is generated depending on determined sharpness for sharpening the determined object 8.

According to an embodiment depending on the vehicle movement direction and the vehicle movement status, the camera 4 is selected. Furthermore, depending on a vehicle movement speed as the vehicle movement status, the camera 4 is selected.

The vehicle movement status signal 17 is received from the speedometer device 18 and/or the gear position device 19 and/or a navigation device of the motor vehicle 1. Furthermore, depending on the vehicle movement status signal 17, a front camera 4 and/or a rear view camera 4 and/or side view camera 4 is selected.

According to another embodiment, depending on the vehicle movement status signal 17, the region of interest in the image 26 for determining the object 8 is selected. Furthermore, depending on the vehicle movement status signal 17, an object 8 in the image 26 of at least two objects 8 in the image 26 is selected and the sharpness of the selected object 8 is determined. Furthermore, depending on a decision criterion, the object 8 is selected. For example, depending on the decision criterion, an object class of each object 8 is determined and depending on a relevance of an object class for the current vehicle movement status, the object 8 is selected. Furthermore, depending on a determined distance of an object 8, relative to the motor vehicle 1, the object 8 is selected.

As already mentioned, for detecting the at least one object 8, a bounding box algorithm is used. Furthermore, the at least one object 8 relevant for focusing is optically highlighted for being presented on a display device 27 (Fig. 1).

## Claims

1. A method for generating a focus signal (25) for focusing of at least one camera (4) of an assistance system (2) of a motor vehicle (1) by an electronic computing device (6), comprising the steps of:
- receiving a vehicle movement status signal (17);
- depending on the vehicle movement status signal (17) selecting a camera (4) from at least two cameras (4) of the motor vehicle (1);
- receiving at least one captured image (26) from the selected camera (4) of surroundings (5) of the motor vehicle (1);
- detecting at least one object (8) in the received image (26);
- determining a sharpness of that at least one object (8) in the captured image (26); and
- generating the focus signal (25) depending on the determined sharpness for sharpening the determined object (8).

2. The method according to claim 1,
**characterized in that**
depending on a vehicle movement direction as the vehicle movement status the camera (4) is selected.

3. The method according to claim 1 or 2,
**characterized in that**
depending on a vehicle movement speed as the vehicle movement status the camera (4) is selected.

4. The method according to any one of claims 1 to 3,
**characterized in that**
the vehicle movement status signal (17) is received from a speedometer device (18) of the motor vehicle (1) and/or a gear position device (19) of the motor vehicle (1) and/or a navigation device of the motor vehicle (1).

5. The method according to any one of claims 1 to 4,
**characterized in that**
depending on the vehicle movement status signal (17) a front view camera (4) and/or a rear view camera (4) and/or a side view camera (4) is selected.

6. The method according to any one of claims 1 to 5,
**characterized in that**
depending on the vehicle movement status signal (17) a region of interest in the image (26) for determining the object (8) is selected.

7. The method according to any one of claims 1 to 6,
**characterized in that**
depending on the vehicle movement status signal (17) an object (8) in the image (26) of at least two objects (8) in the image (26) is selected and the sharpness of the selected object (8) is determined.

8. The method according to claim 7,
**characterized in that**
depending on a decision criterion the object (8) is selected.

9. The method according to claim 8,
**characterized in that**
depending on the decision criterion an object class of each object (8) is determined and depending on a relevance of an object class for the current vehicle movement status the object (8) is selected.

10. The method according to claim 8 or 9,
**characterized in that**
depending on a determined distance of an object (8) relative to the motor vehicle (1) the object (8) is selected.

11. The method according to any one of claims 1 to 10,
**characterized in that**
for detecting the at least one object (8) a bounding box algorithm is used.

12. The method according to any one of claims 1 to 11,
**characterized in that**
the at last one object (8) relevant for focusing is optically highlighted for being presented on a display device (27).

13. A computer program product comprising program code means for performing a method according to any one of claims 1 to 12.

14. A computer-readable storage medium comprising at least the computer program product according to claim 13.

15. An electronic computing device (6) for generating a focus signal (25) for focusing of at least one camera (4) of an assistance system (2) of a motor vehicle (1), wherein the electronic computing device (6) is configured for performing a method according to any one of claims 1 to 12.
